# EUROPEAN PATENT APPLICATION

(11) **EP 2 161 878 A1**
(43) Date of publication of application: **10.03.2010**
(21) Application number: 09251986.7
(22) Date of filing: 12.08.2009
(51) Int. Cl.: H04L 12/28, G05B 15/02

(54) **System for controlling electrically operated devices**

(30) Priority: 12.08.2008 GB 0814680
(71) Applicant: Hathaway Technologies Ltd., Menai Bridge LL59 5BU (GB)
(72) Inventor: Ratcliff, Ben Laurence, Romsey, SO51 7RS (GB)
(74) Representative: Hamilton, Alistair

(57) **Abstract**

A system for controlling electrically-operated devices within an area such as a room is disclosed. The system comprises a visual display screen upon which a representation of the area within which electrically-operated devices are disposed is displayed, and one or more representation of an electrically-operated device within the area. An input device is operable by a user to activate a representation of an electrically-operated device. In response, a control stage operates in response to inputs received from the input device, to modify the operation of the electrically-operated device associated with the representation. The electrically-operated devices to be controlled by the system may include, but are not limited to: electrical devices, such as a fan, a heater, a light, air conditioning; effectors for opening and closing a door or a window; electronic devices such a television set, a television receiver/decoder, a video recording device and audio equipment. The system can operate in a design mode, in which a user can create or amend the representation of the area and the electrically-operated devices within it.

## Description

This invention relates to a system for controlling electrically operated devices. It has particular, but not exclusive, application to a system that enables a person of restricted mobility to control electrically operated devices within a domestic, work, educational, care or other environment.

Computer technologies have been developed to help those with physical disabilities live an independent (or less dependent) life. In particular, computer systems have been developed that can provide an interface to operate electrical and electronic devices remotely. Such systems can be provided with a user interface that can be tailored to the abilities of the individual user.

Although such systems are functional, they do not present a user interface that is familiar to those used to operating the electrical and electronic devices manually. Interaction with such systems, that disclosed in US-A-2007/0112939, is highly abstracted from interaction with the actual devices, and is therefore not at all intuitive for those who are not familiar and adept at using computers. Even for those who are familiar with computers, known systems leave more of a technical than a domestic impression on their users. Moreover, they require education before they can be used effectively, which means that casual use by those other than a regular user is discouraged.

Most seriously, conventional systems, such as that disclosed in US-A-2003/0038730 offer little flexibility, since they must be programmed to associate physical devices with their software representations within the system - something that is beyond the capability of many users.

Accordingly, this invention provides a system for controlling electrically-operated devices comprising: a visual display screen upon which is displayed a representation of an area within which electrically-operated devices are disposed, and one or more representation of an electrically-operated device within the area; an input device operable by a user to activate a representation of an electrically-operated device; and a control stage, operative in response to inputs received from the input device, to modify the operation of the electrically-operated device associated with the representation.

Thus, a user can interact with all of the devices within an area such as a room, several rooms, or an entire house.

In cases in which an electrically-operated device has more than one function, activation of its representation may cause an additional display object to be shown, the appliance being controlled by interaction with the additional display object using the input device. For example, the additional display object may be a dialogue box. The dialogue box may include controls that correspond to those of the actual electrically-operated device. The controls may be standard GUI objects. Alternatively, and particularly advantageously in the case of a complex electrically-operated device, the additional display object may be a more detailed representation, such as a pictorial representation, of the electrically-operated device or a controller for the electrically-operated device.

The system can preferably be operated in a design mode, in which a user can create or amend the representation of the area and the electrically-operated devices within it. In the design mode, a user may create, amend or delete an architectural layout that represents a building within which electrically-operated devices to be controlled are located. The architectural layout may include walls, doors, windows, and other building components. The architectural layout may further include items that are present within the space, but which are not controlled by the system. These may include items of furniture.

Electrically-operated devices to be controlled by the system include, but are not limited to: electrical devices, such as a fan, a heater, a light, air conditioning; effectors for opening and closing a door or a window; electronic devices such a television set, a television receiver/decoder, a video recording device and audio equipment.

A system embodying the invention typically includes a transmitter for generating signals to mimic those generated by a remote controller. This enables the system to control complex devices, such as a television, receiver/decoder or an audio system without modification to the device and without interfering with its normal operation. The transmitter typically operates to generate infra-red radiation. The system may further include a receiver for detecting signals generated by a remote controller. This allows the system to capture signals from an actual remote controller in order that it can mimic such signals using the transmitter. The receiver may include an infra-red photodiode.

Devices to be controlled may further include virtual devices. Virtual devices may be have a representation, but not a directly corresponding physical device. For example, a virtual device may be a macro that can perform several functions when activated through its representation. Alternatively, a virtual device may be instantiated within computer hardware and software, such as a VoIP system or a telephony subsystem for sending SMS text messages. A further example of a class of virtual devices are macros. In this case, the on-screen representation is can be used to activate a sequence of commands. For instance, if a user wishes to control a hi-fi system that comprises separate components (an amplifier, CD player, etc.) then activation of the hi-fi action to turn the system on, activates a macro that turns on each of the individual components. However, subsequently each of the components can be controlled individually.

Embodiments of the invention will now be described in detail, by way of example, and with reference to the accompanying drawings, in which:

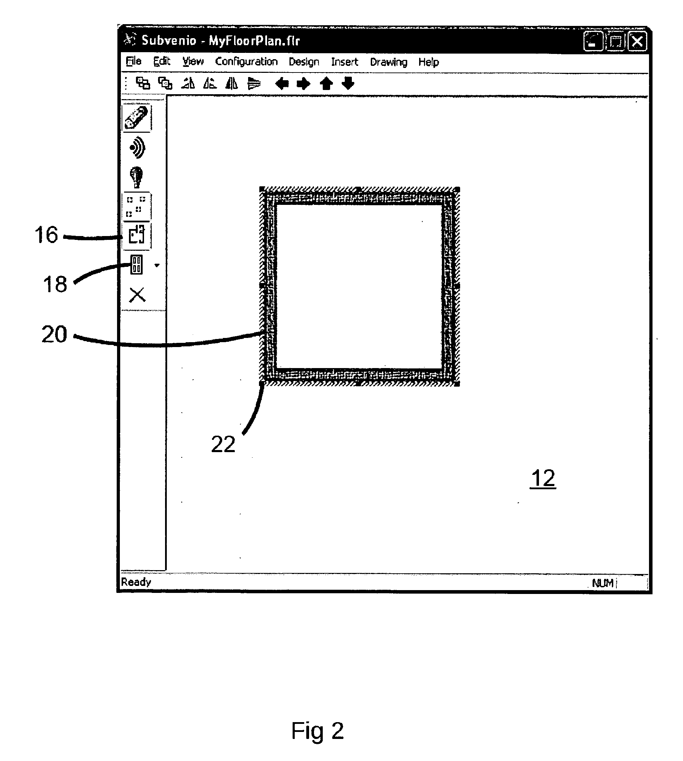

Figures 1 to 4 are screenshots of an application embodying the invention showing development of a control system;
Figure 5 is a screenshot of the application of Figure 1 embodying the invention showing a completed control layout
Figure 6 is a screenshot of an appliance selection dialogue of the application of Figure 1.
Figure 7 is a screenshot of the application of Figure 1 showing a telephony application;
Figure 8 is a screenshot of the application of Figure 1 showing a remote control application;
Figure 9 shows a system embodying the invention being programmed using an infra-red remote controller;
Figure 10 is a screenshot of a remote signal configuration dialog of the application of Figure 1; and
Figure 11 is a screenshot of an embodiment that uses an alternative graphical representation.

The present embodiment of the invention is constituted by a software application running on a general-purpose computer, and control hardware, operated by the computer, to control the function of various electrically-operated devices. The general-purpose computer might by a typical PC. More advantageous for many applications would be an ultra-mobile PCs (UMPC) such as the Asus EEEPC. The infra-red transmitter is based on the USB-UIRT, which is a simple USB-interfaced infra-red transceiver. This has the ability to learn and transmit intrared signals. Control of non-Infra-red devices may be controlled using control signals carried over electrical powerlines, such as those according to the X10 industry standard. In such cases, a controller module is controlled by the computer, and each appliance t be controlled using this mechanism is associated with an appliance unit.

The software will now be described in detail.

The software of this embodiment is an application that runs under the Microsoft Windows XP or Microsoft Windows Vista operating system. However, it will be clearly understood that similar embodiments could be produced that execute on other operating systems that support graphical user interfaces.

The application operates in two top-level modes: a design mode and a control mode. In the design mode, a user can connect the application to the various devices to be controlled. In the control mode, a user can use the application to control operation of the connected electrically-operated devices.

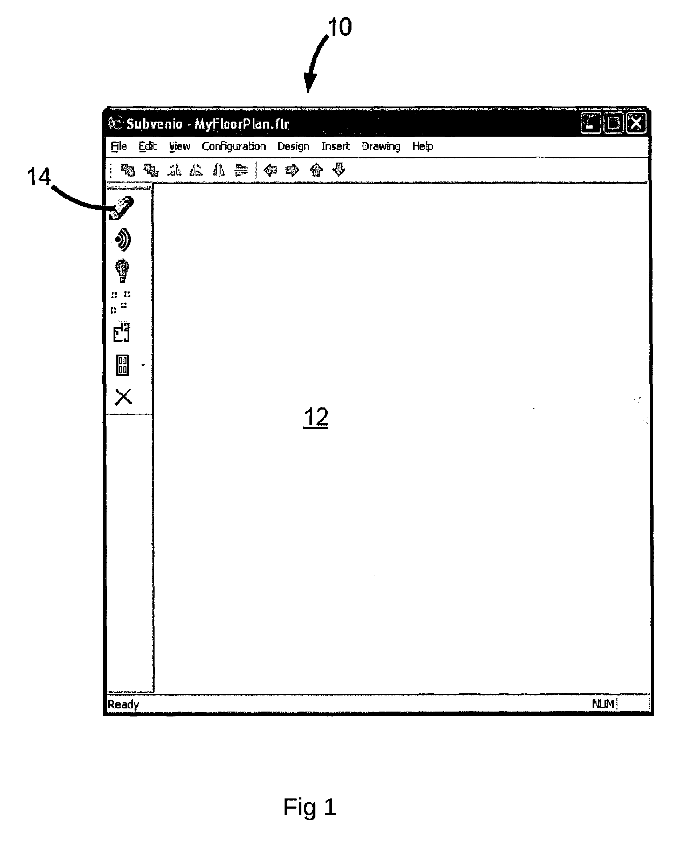

When the application is first started, a user is presented with a window 10 as shown in Figure 1. The central part 12 of the window 10 represents a workspace within which electrically-operated devices to be controlled can reside. The application knows nothing about the devices that it is to control. Therefore, a user must first enter design mode by activating a menu item or clicking on an icon 14.

In designing a control layout, the first typical step taken by a user is to construct a representation of one or more rooms within which devices are located. The user clicks on an icon 16 or activates a menu item to enter a second-level floor edit mode. In floor edit mode, a user can design a floor plan layout.

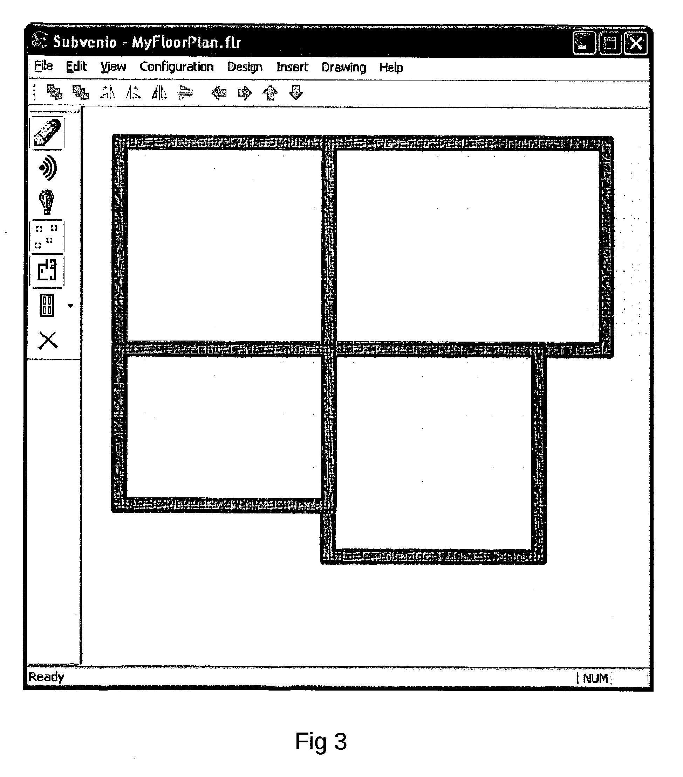

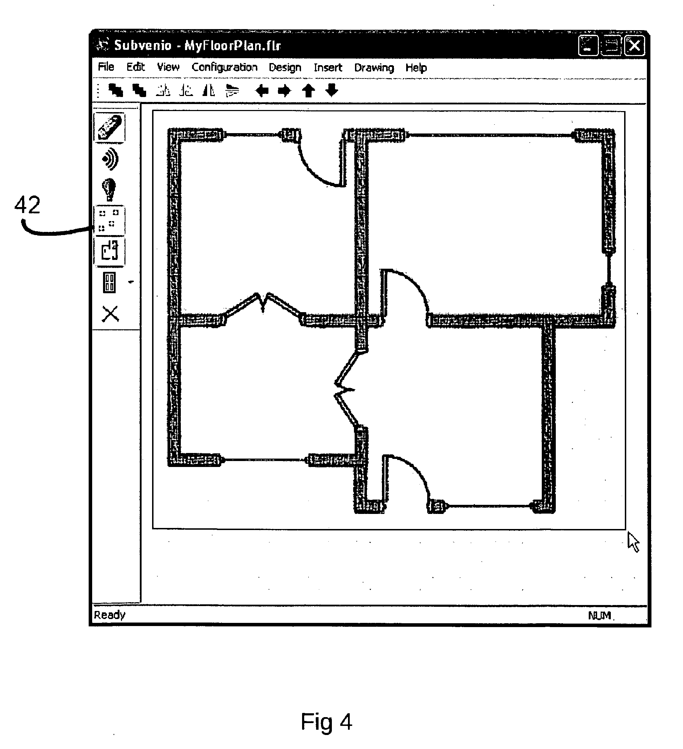

A typical first step in designing a floor layout is to add a room. The user clicks on a "new room" icon 18, and the application adds a rectangular representation 20 of a room to the workspace 12. The representation 20 of the room includes control handles 22 so that a user can use "click and drag" input actions to move and resize the room, as required. This process can be repeated until all rooms in a basic floor layout are represented, as shown in Figure 3. The user can then add architectural features to the basic floor layout. These features include, but are not limited to, internal and external doors, windows and partitions. These can be selected, scaled and rotated as necessary using the graphical user interface. A completed architectural layout is shown in Figure 4.

The user may also be presented with the option to add representations of flooring materials to the architectural layout. These may be generic representations of wooden, tiled and carpeted floors of a variety of colours. These serve no functional purpose; they are simply to add additional context to appliances that will be added to the layout, and help a user recognise the various rooms depicted in the architectural layout.

Once the architectural layout is complete, the user can start to add icons representing electrically-operated devices to it. The user clicks on an icon 40 to enter a second-level device edit mode. In floor edit mode, a user can design a floor plan layout.

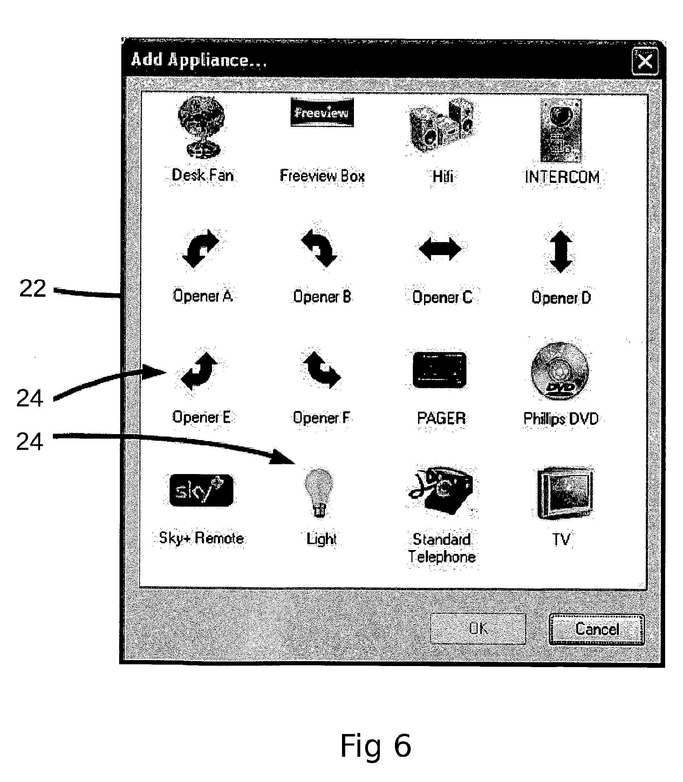

In the device edit mode, the user is presented with a dialogue box 42, shown in Figure 6, that contains a plurality of icons 42, each of which corresponds to a respective type of electrically-operated device that the system is capable of controlling. These types of electrically-operated devices include, in this example, a fan, a television receiver/decoder, an audio system, an intercom, a power door controller, a pager, a DVD player, a remote control, a light, a telephone, and a television.

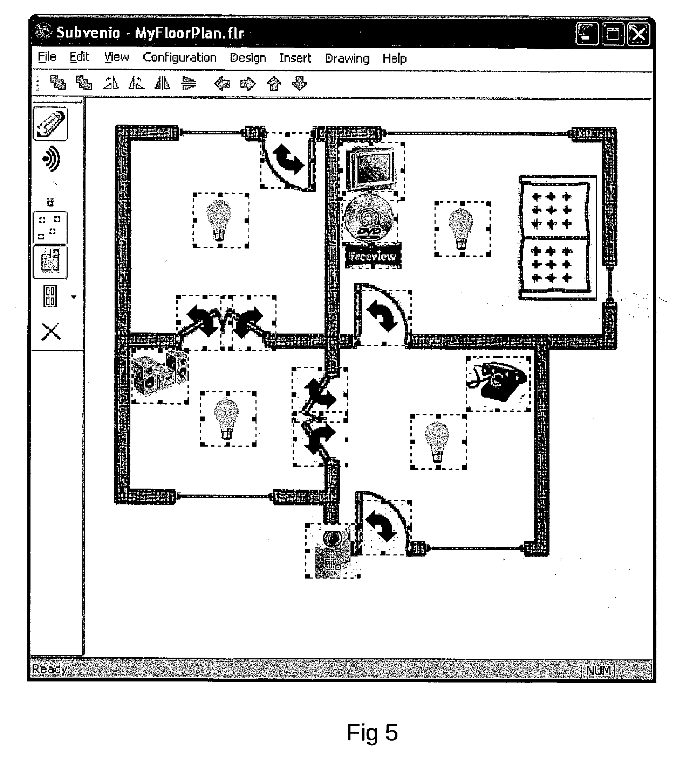

To add one of these devices, the user clicks on the device icon within the dialogue box 42, and then clicks on the part of the floor plan to which the device is to be added. Once it is positioned, the device can be moved as required using click and drag operations. Examples of a final arrangement are shown in Figures 5, 7 and 8.

In addition to electrically-operated devices that can be controlled, the user may also add a range of non-functional items, selected from an alternative dialogue box, using a similar procedure. These non-functional items include, for example, items of furniture or domestic fittings, and serve to add context for the functional items that are controlled by the system. For instance, in a lounge, a television set is typically placed to face a chair or a sofa, and this can be represented in the layout created in the procedure described above.

Once the layout is finalised, the user leaves design mode by clicking again on the design mode icon 20. The application then enters control mode. In control mode, a user can interact with icons on the user interface of the application to effect operation of the corresponding physical devices, but cannot rearrange their layout. The nature of the interaction required depends upon the nature of the electrically-operated device that is being controlled, as will now be described. (None of the following are limiting lists - they just present examples of devices for a much wider range of possibilities.)

Some very simple devices may operate when a user simply activates the corresponding icon. Such devices might include a bell to summon assistance. They may also include a camera that, when activated, opens a window that displays output of a camera placed in the corresponding location.

A larger number of different electrically-operated devices have two states, and each time the corresponding icon is activated, the device is toggled between its states. Such devices might include lights that can be on or off and powered doors that can be open or closed. The appearance of the icon may be changed to indicate the current state of the device.

Another class of electrically-operated devices have several states that can be logically arranged in a linear progression. These include, windows that can be closed, partially opened, or fully opened and heaters and fans that can be off or on at several power settings. The states may be clearly discrete (for example, two or three "on" states) or apparently continuous with many states having just small steps between them.

Yet another class of electrically-operated devices each have their own control requirements that are essentially arbitrary and specific to the individual devices. These include complex devices such as telephones and control units for entertainment devices, such as audio systems and telephones. Typically, when a user activates an icon corresponding to one of these devices, then a new window is opened that includes controls that are specific to the device concerned.

In each of the above cases, the software may operate to update the appearance of the icons to represent the operational state of the associated electrically-operated device. For example, the icon may be highlighed or its colour may be changed.

All of the above classes of device may also be implemented as virtual devices. A virtual device is presented in the user interface and can be interacted with just as one of the devices discussed above. However, there is not a one-to-one relationship between the representation and a single piece of hardware.

In the case of telephony: a real device that can be controlled may be a telephone. A corresponding virtual device might be a VoIP system, which is implemented a combination of hardware (a microphone/speaker, handset, headset, etc.) and software operative to process the audio signals and operate the VoIP network protocols.

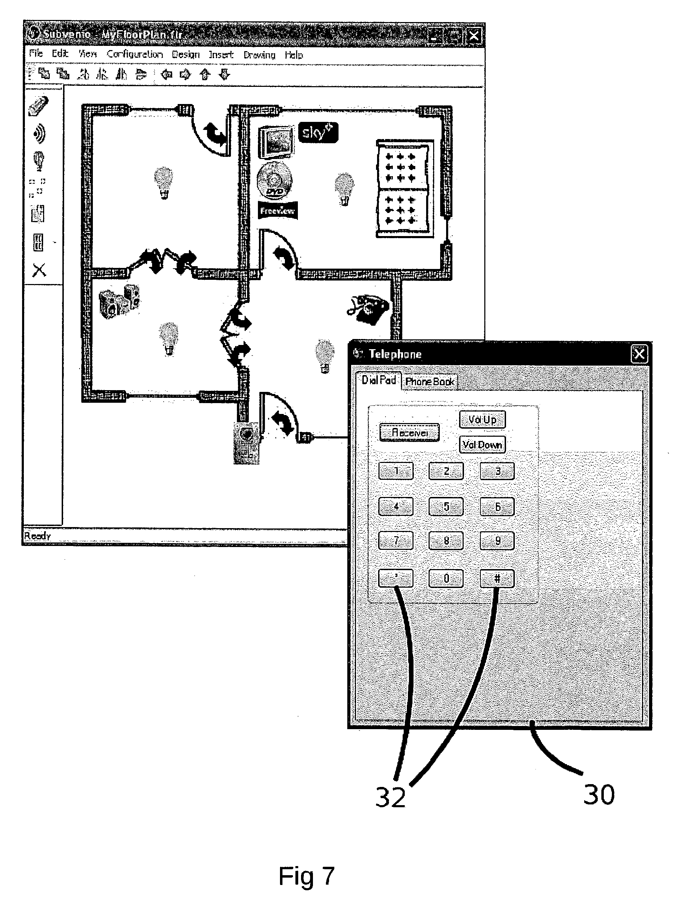

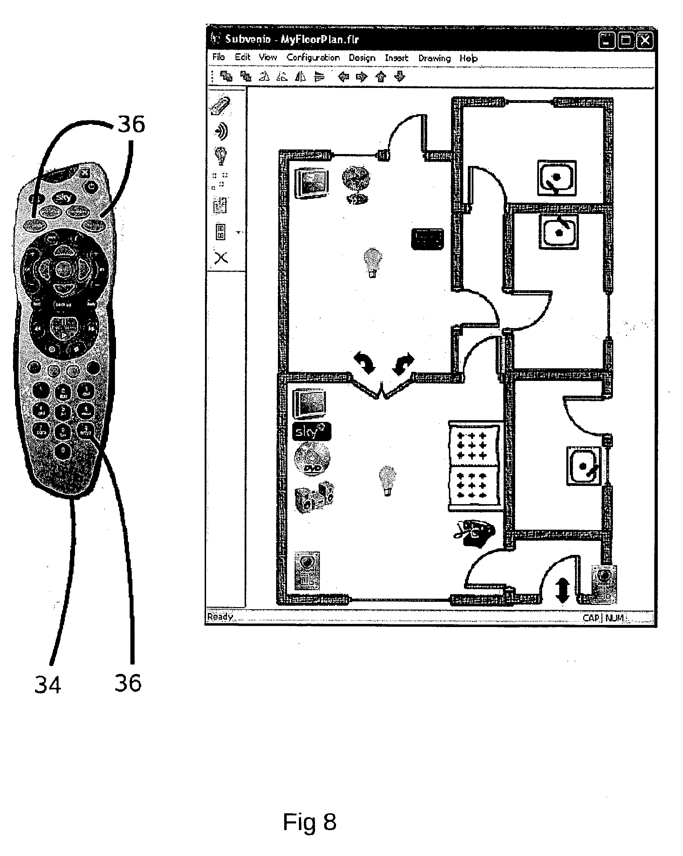

This embodiment proposes two types of control window, respective examples being shown in Figures 7 and 8.

The control window 30 shown in Figure 7 uses GUI widgets provided as part of the operating system to display controls that can be used to operate the electrically-operated device. The example illustrated is to control a telephone. As will be seen, the controls of the telephone are represented by pushbutton widgets 32 that are provided as part of the standard Windows GUI. The control window provides an abstract representation of a generic telephone without attempting to represent the appearance of a specific telephone, or alternatively represents a virtual telephone in the form of a VoIP system.

The control window 34 shown in Figure 8 represents an actual electrically-operated device; in this case, a remote control for a digital television receiver/decoder. The control window 34 includes an image that represents the appearance of the device in question, and the peripheral shape of the control window 34 approximates the actual shape of the device. A user can interact with the device by using an input controller to move a cursor to the parts 36 of the image that represent user controls and then activating the controls, for example by clicking the input controller. The software maps regions of the image that illustrate controls to generate events that can be handled to generate the appropriate control actions. The software may also change the image to represent a change of state of the electrically-operated device. Several different devices may be represented in this way, the images enabling a user to quickly identify the individual device that is being controlled.

To implement the function of a remote control, the system is provided with an infra-red transmitter and an infra-red receiver. The transmitter is placed to direct infra-red signals to an electrically-operated device to be controlled.

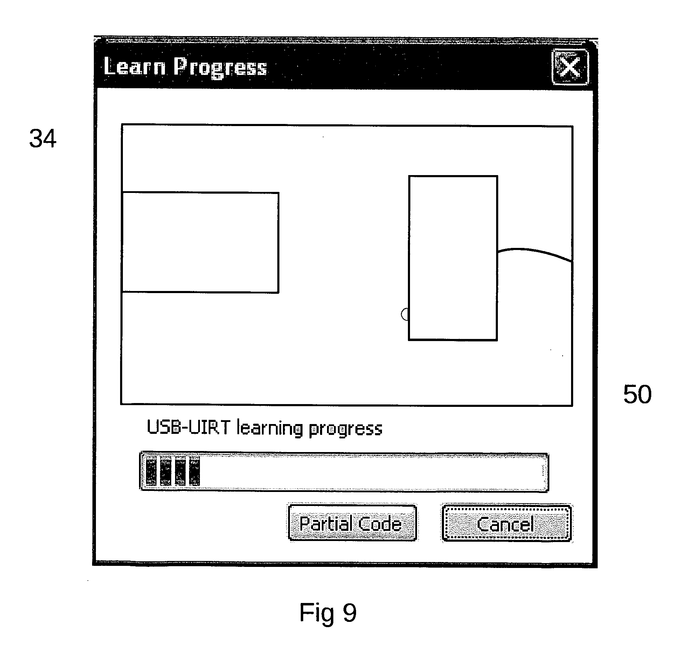

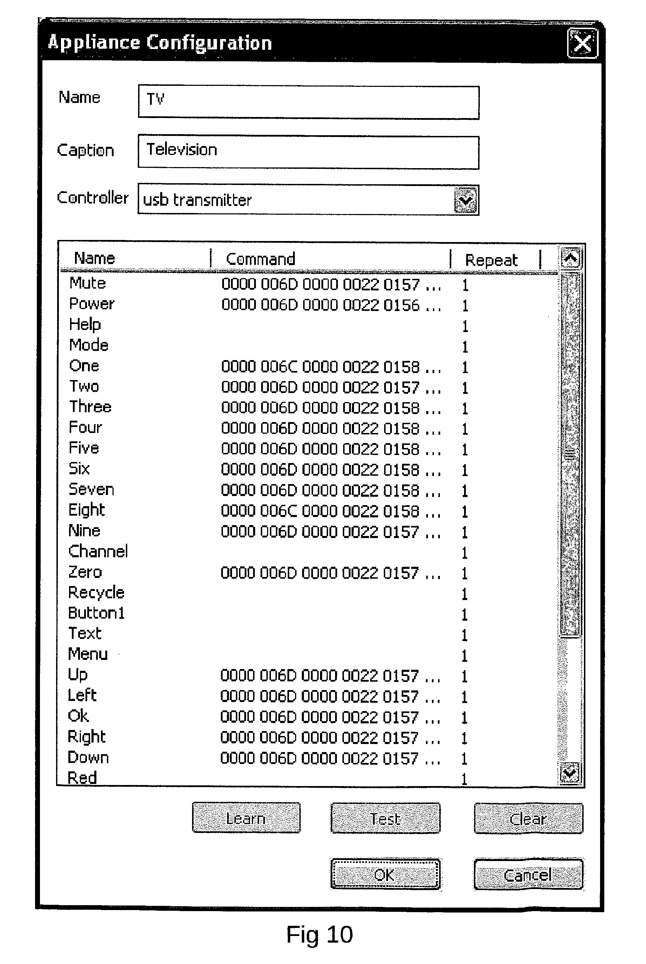

The system can be operated in a programming mode in which signals are the individual controls of the software representation of the remote controller are activated, and the corresponding control of an actual remote controller 34 are used to direct infra-red signals to the infra-red receiver 50, as shown in Figure 9. This allows the software to capture and store the infra-red signals associated with each of the individual controls so that the correct signals can be generated when the corresponding controls in the software representation are activated. The software allows a user to inspect and edit the configuration of a device, if necessary, by way of a configuration dialog, as shown in Fig 10.

In a like manner, an icon that represents an appliance can be associated with the X10 controller to cause it to send signals to the appliance modules.

It will be understood that the system allows the devices that it controls to be operated by pointing to GUI objects and activating them. This can be done using an input controller appropriate to the user's level of ability. For example, some people may use a conventional mouse, trackball or graphics tablet. Alternatively, the system could be controlled using any one of a large range of input controllers suited to those who have less ability. These may include, but are not limited to, systems that track a user's head movement and speech recognition systems.

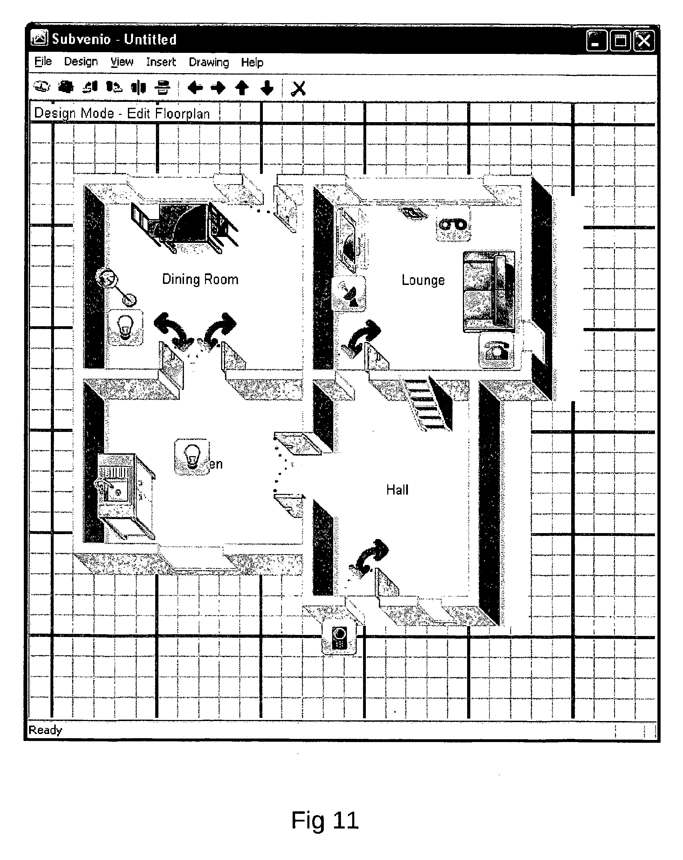

It is preferable that the GUI can be themed to provide a representation that is appropriate to a particular application. The screen shown in Figure 11 provides substantially the same functionality as that of Figure 5, but the graphical elements are more complex. This allows advantage to be taken of the display of a complex computer, while the simpler representations of the preceding figures may be more suited to the more limited display capability of a lower-powered computer, such as a netbook.

MICROSOFT, WINDOWS, VISTA and XP are trade marks of Microsoft Corporation.

## Claims

1. A system for controlling electrically-operated devices comprising:
• a visual display screen upon which is displayed a representation of an area within which electrically-operated devices are disposed, and one or more representation of an electrically-operated device within the area;
• an input device operable by a user to activate a representation of an electrically-operated device; and
• a control stage, operative in response to inputs received from the input device, to modify the operation of the electrically-operated device associated with the representation; **characterised in that:**
• the system can be operated in a design mode, in which a user can create or amend the representation of the area and the electrically-operated devices within it.

2. A system according to claim 1 that includes an electrically-operated device that has more than one function, in which activation of its representation causes an additional display object to be shown, the appliance being controlled by interaction with the additional display object using the input device.

3. A system according to claim 2 in which the additional display object is a dialogue box.

4. A system according to claim 3 in which the dialogue box includes controls that correspond to those of the actual electrically-operated device.

5. A system according to claim 4 in which the the controls include standard GUI objects.

6. A system according to claim 2 in which the additional display object includes a more detailed representation, such as a pictorial representation, of the electrically-operated device or a controller for the electrically-operated device.

7. A system according to claim 6 in which, in the design mode, a user may create, amend or delete an architectural layout that represents a building within which electrically-operated devices to be controlled are located.

8. A system according to claim 7 in which the architectural layout includes walls, doors, windows, and other building components.

9. A system according to claim 7 or claim 8 in which the architectural layout may further include additional items that are present within the space, but which are not controlled by the system.

10. A system according to claim 9 in which the additional items include items of furniture.

11. A system according to any preceding claim in which the electrically-operated devices to be controlled by the system include, but are not limited to: electrical devices, such as a fan, a heater, a light, air conditioning; effectors for opening and closing a door or a window; electronic devices such a television set, a television receiver/decoder, a video recording device and audio equipment.

12. A system according to any preceding claim further including a transmitter for generating signals to mimic those generated by a remote controller.

13. A system according to claim 12 in which the transmitter operates to generate infra-red radiation.

14. A system according to claim 12 or claim 13 in which the system further includes a receiver for detecting signals generated by a remote controller.

15. A system according to claim 14 in which can operate to capture signals from an actual remote controller in order that it can mimic such signals using the transmitter.
